Europäisches Patentamt

European Patent Office

Office européen des brevets

(19)

(11) Veröffentlichungsnummer: **0 150 381 B1**

(12) **EUROPÄISCHE PATENTSCHRIFT**

(45) Veröffentlichungstag der Patentschrift: 17.10.90

(21) Anmeldenummer: 84115229.1

(22) Anmeldetag: 12.12.84

(51) Int. Cl.⁵: **C 02 F 1/46, C 02 F 1/66**

(54) **Verfahren zur Neutralisation von Abgaskondensat aus Brennwertkessel.**

(30) Priorität: 17.12.83 DE 3345783

(43) Veröffentlichungstag der Anmeldung:
07.08.85 Patentblatt 85/32

(45) Bekanntmachung des Hinweises auf die Patenterteilung:
17.10.90 Patentblatt 90/42

(84) Benannte Vertragsstaaten:
AT BE CH DE FR GB IT LI LU NL SE

(56) Entgegenhaltungen:
DE-A-2 253 366
DE-A-2 601 080
DE-A-3 224 115
DE-C- 865 992
US-A-4 309 947

(73) Patentinhaber: **Vereinigte Elektrizitätswerke Westfalen AG**
**Rheinlanddamm 24**
**D-4600 Dortmund 1 (DE)**

(72) Erfinder: **Rickert, Hans, Prof.**
**Wilhelm-Dresing-Strasse 37**
**D-4600 Dortmund 50 (DE)**
Erfinder: **Holzäpfel, Günter, Dr.**
**Silberhecke 52**
**D-4600 Dortmund (DE)**
Erfinder: **Bäumler, Heinz, Dipl.-Ing.**
**Am Kraftwerk 32**
**D-4600 Dortmund (DE)**
Erfinder: **Müller, Peter, Dipl.-Ing.**
**Kleine Schwerter Strasse**
**D-4600 Dortmund (DE)**

(74) Vertreter: **Patentanwälte Meinke und Dabringhaus Dipl.-Ing. J. Meinke Dipl.-Ing. W. Dabringhaus**
**Westenhellweg 67**
**D-4600 Dortmund 1 (DE)**

Courier Press, Leamington Spa, England.

## Beschreibung

Die Erfindung richtet sich auf ein Verfahren zur Neutralisation von Abgaskondensat aus Brennwertkesseln.

Um möglichst viel der in fossilen Brennstoffen enthaltenen Energie zu nutzen, ist man bestrebt, die Rauchgastemperatur, d.h. diejenige Temperatur, mit der die Rauchgase letztendlich der Atmosphäre zugeleitet werden, möglichst niedrig zu halten. Hierzu sind die sogenannten Brennwertkessel entwickelt worden, bei denen die Rauchgase entweder unmittelbar hinter der Feuerstätte oder in einem nachgeschalteten Wärmetauscher weiter abgekühlt werden, und zwar in der Regel unter den Taupunkt, der im Mittel bei ca. 55°C liegt. Infolge der Unterschreitung des Taupunktes tritt an den nachfolgenden Aggregatteilen kondensationsbildung auf. Das Kondensat ist dabei mit den wasserlöslichen Bestandteilen der Rauchgase angereichert und besitzt in der Regel einen pH-Wert zwischen 3 und 4. Dieses saure Kondensat kann nicht nur zu Korrosionsschäden unmittelbar bei den Anlageteilen führen, mit denen es in Verbindung tritt, so daß diese häufig aus sehr hochwertigen Werkstoffen gefertigt werden müssen, sondern es darf auch nicht den öffentlichen Entwässerungssystem zugeführt werden. Dies wegen wasserwirtschaftlicher Bedenken einerseits un der Befürchtung, daß auch weiterhin Korrosionen im öffentlichen Netz entstehen können. Nicht zuletzt vermögen die Säuren auch die biologischen Stufen von Kläranlagen nachhaltig zu stören, wenn nicht gar zu zerstören.

Man ist daher bemüht, den pH-Wert der den öffentlichen Abwässern zugeführten Kondensate anzuheben und zwar in jedem Falle über 6,5.

Eine bekannte Möglichkeit zur Neutralisation derartiger Kondensate besteht in der chemischen Neutralisation. Diese wiederum kann zwei unterschiedliche Variantent aufweisen, nämlich einmal wird das Kondensat z.B. durch eine Schüttung aus einem festen, die Neutralisation bewirkenden Stoff geleitet oder aber es wird eine neutralisierende Flüssigkeit, wie eine Lauge, zugegeben.

Was die chemische Neutralisation angeht, gibt es eine Reihe von Möglichkeiten, auf die es hier im einzelnen nicht näher ankommt. Nachteilig an bekannten chemischen Verfahren ist insbesondere, daß große Mittel an zur Neutralisation fähigen Stoffen eingesetzt werden müssen, wobei vielfach eine entsprechende Menge an Schlamm, Gips oder dgl. erhalten wird, was zum Teil unwirtschaftlich und auch sehr unpraktisch sein kann.

Es ist ferner bekannte (DE—A—2 253 366), insbesondere bei Anlagen zur Dampferzeugung und bei Kühlanlagen den pH-Wert der Flüssigkeit durch electrochemische Behandlung innerhalb bestimmter Grenzen zu halten, wobei der pH-Wert der Flüssigkeit durch geeignete Regelsysteme regulierbar sein soll. Darüber hinaus sind in großtechnischen Verfahren Einrichtungen bekannt (DE—C—865 992), mit denen auf elektrochemischem Wege auf die Säurekonzentration von in Rohrleitungen strömenden Flüssigkeiten Einfluß genommen wird.

Bei deisen bekannten Verfahren kommt es im Regelfalle zu einer unkontrolierten Elektrolyse, wobei die bekannten Verfahren entweder mit festen Spannungen arbeiten oder mit festen Ströment. Damit ist aber eine zuverlässige Neutralisation von Abgaskondensat aus Brennwertkesseln nicht möglich, da insbesondere das ungewollte Entstehen von Sauerstoff oder anderen möglichen Gefahrenquellen nicht zuverlässig vermieden werden kann.

Aufgabe der Erfindung ist die Schaffung einer Lösung, mit der die aus dem Stand der Technik bekannte Verfahrensweise der Anwendung bei der Behandlung von Abagsen von Abgasen aus sogenannten Brennwertkesseln zugänglich gamacht wird, d.h. die Neutralisation von Kondensat ohne Finsatz von festen oder flüssigen Neutralisationsmitteln bei einer einfachen Prozeßführung mit möglichst geringem apparativen Aufwand möglich gemacht wird.

Diese Aufgabe wird gemäß der Erfindung dadurch gelöst, daß das Abgaskondensat in einem Behälter gesammelt und zur elektrochemischen Behandlung eine Kathode und eine davon getrennnte Anode eingesetzt werden und das Kondensat durch eine kathodische Reaktion neutrailisiert wird, wobei die Regelung des kathodischen Stromes intervallartig erfolgt und die zwischen der Anode und Kathode angeordnete Stromquelle potentiostatisch geregelt und als Meßelektrode die Kathode in den nichstrombeaufschlagten Intervallen einer Intervallregelung herangezogen wird.

Mit der Erfindung wird erreicht, daß die Neutralisation gegenüber den sonst üblichen Verfahrensweisen mit einem appartive sehr geringen Aufwand bei sehr kompakter Bauweise der entsprechenden Vorrichtung möglich gemacht wird. Sie kann parktisch an jedem Einbauort vorgesehen werden und eignet sich insbesondere auch zur Nachrüstung bereits bestehender Anlagen, wobei davon auszugehen ist, daß alle herkömmlich Brennwertkessel auch mit einer Stromversorgungsanlage versehen sind, so daß eine elektrochemischen Neutralisation durchführbar ist. Es ist dabei eine ganz gezielte Regelung der Neutralisation möglich, wodurch insbesondere mögliche Gefahrenquellen, wie ungewolltes Entstehen von Sauerstoff, vermieden werden.

In vorteilhafter Ausgestaltung der Erfindung ist vorgesehen, daß die Anode gegenübr der Kathode innerhalb eines porösen Keramikrohres als Diaphragma abgetrennt ist, wobei als Kathodenmaterial Edelstahl, Graphit oder platiniertes Titan und als Anodenmaterial platiniertes oder mit Rutheniumoxid beschichtetes Titan herangezogen wird.

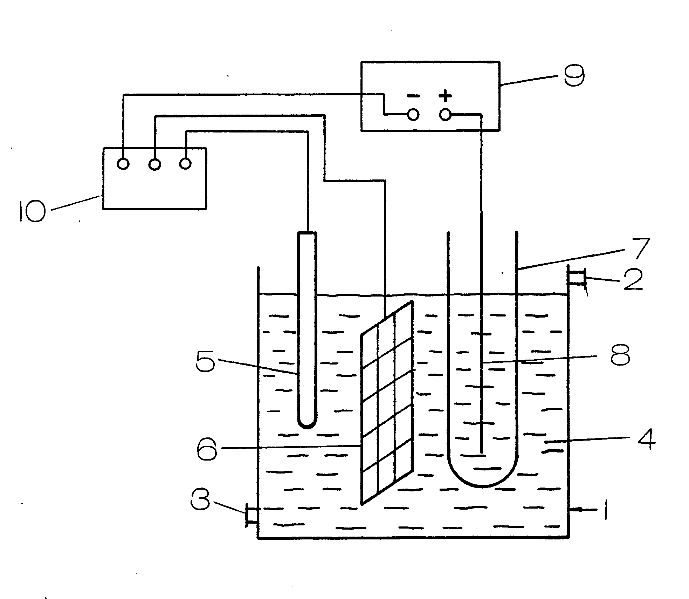

Ein Prinzip der Erfindung ist in der beigefügten Figur schematisch wiedergegeben.

In einem Behälter 1, der mit einem Zulauf 2 und einem Ablauf 3 ausgerüstet ist, befindet sich das mit 4 bezeichnette zu behandelnde Kondensat.

In das Kondensat taucht in der Figur von links nach rechts eine Meßelektrode 5, eine Kathode 6, ein Diaphragama 7, z.B. ein poröses Tonrohr, welches die Anode 8 umgibt.

Neben einem Gleichstromnetzgerät 9 als Stromquelle ist ein pH-Meßgerät 10 vorgesehen, welches gleichzeitig als Regelgerät ausgebildet ist.

Die Wirkungsweise der Anordnung ist dabei die folgende: z.B. bei einem Kondensatvolumen von 500 cm³ mit einem pH-Wert von 3,6 wird bei einem Stromfluß von etwa 20 mA in einer Zeit von etwas 45 Min. der pH-Wert auf 8 eröht. Bei der mit der dargestellten Anordnung durchgeführten Untersuchung war dieser pH-Wert als Grenzwert eingestellt worden. Nach Erreichen dieses pH-Wertes schaltet sich die Einrichtung aus, der Ablauf 3 kann geöffnet werden, um das Kondensat den Abwässern zuzuleiten, während der Zulauf 2 zur Aufnahme neuen Kondensates ebenfalls geöffnet werden kann.

Mit der dargestellen Verfahrensweise kann auf elektrochemischen Wege eine Neutralisation durchgefuhrt werden, ohne daß es zu Chemikalienverbrauch kommt. Gleichzeitig kann auf diesem schon frühzeitig der pH-Wert des Kondensates angehoben werden, so daß damit bereits sehr fruhzeitig auch Korrosionsgefährdung der nachfolgenden Anlageteile vermieden wird.

## Patentansprüche

1. Verfahren zur Neutralisation von Abgaskondensat aus Brennwertklesslen, dadurch gekennzeichnet, daß das Abgaskondensat in einem Behälter gesammelt und zur elektrochemischen Behandlung eine Kathode und eine davon getrennte Anode eingesetzt werden und das Kondensat durch eine kathodische Reaktion neutralisiert, wird wobei die Regelung des kathodischen Stromes intervallartig erfolgt und die zwischen der Anode und Kathode angeordnete Stromquelle potentiostatisch geregelt und als Meßelektrode die Kathode in den nichtstrombeaufschalgten Intervallen einer Intervallregelung herangezogen wird.

2. Verfahren nach Anspruch 1, dadurch gekennziechnet, daß die Anode gegenüber der Kathode innerhalb eines porösen Keramikrohres als Diaphragma abgetrennt ist, wobei als Kathodenmaterial Edelstahl, Graphit oder platiniertes Titan und als Anodenmaterial platiniertes oder mit Rutheniumoxid beschichtetes Titan herangezogen wird.

## Revendications

1. Procédé de neutralisation de condensat de gaz d'échappement provenant de chaudières à condensation, caractérisé en ce que le condensat de gaz d'échappement est rassemblé dans un récipient, qu'une cathode et une anode séparée de la première sont utilisées pour le traitement électrochimique, et que le condensat est neutralisé par une réaction cathodique, la régulation du courant cathodique s'effectuant par intervalles, la source de courant montée entre l'anode et la cathode étant régulée potentiostatiquement et la cathode étant utilisée comme électrode de mesure pendant les intervalles d'une régulation par intervalles où le courant n'est pas appliqué.

2. Procédé selon la revendication 1, caractérisé en ce que l'anode est séparée de la cathode à l'intérieur d'un tube en céramique poreuse formant un diaphragme, en utilisant en tant que matériau pour la cathode de l'acier fin, du graphite ou du titane platiné, et en tant que matériau pour l'anode du titane platiné ou du titane recouvert d'une couche d'oxyde de ruthénium.

## Claims

1. A method of neutralising waste gas condensate from calorific value boilers, characterised in that the waste gas condensate is collected in a container and a cathode and an anode which is separate therefrom are used for electrochemical treatment and the condensate is neutralised by a cathodic reaction, wherein regulation of the cathodic current is effected by an interval procedure and the current source arranged between the anode and the cathode is regulated potentiostatically and the cathode is used as a measuring electrode in the intervals in which current is not applied, in an interval regulating procedure.

2. A method according to claim 1 characterised in that the anode is separated from the cathode within a porous ceramic tube as a membrane means, wherein the cathode material used is a high-grade steel, graphite or platinum-plated titanium and the anode material used is platinum-plated titanium or titanium coated with ruthenium oxide.